# EUROPEAN PATENT APPLICATION

(11) **EP 1 107 508 A1**
(43) Date of publication of application: **13.06.2001**
(21) Application number: 99850191.0
(22) Date of filing: 06.12.1999
(51) Int. Cl.: H04L 12/18, H04L 12/28

(54) **System, method and computer program product for sending broadcast messages**

(71) Applicant: TELEFONAKTIEBOLAGET LM ERICSSON, 126 25 Stockholm (SE)
(72) Inventor: Rune, Johan, 181 30 Lidingö (SE)
(74) Representative: Sandström, Staffan Sven

(57) **Abstract**

The invention provides a method in a communication system comprising one or more networks. Each network consists of nodes interconnected by point-to-point links. The system supports distribution of broadcast messages to nodes in the networks. In the method a broadcast message is received at a node in the communications system. The node considers the risk for redundant distribution of the broadcast message. Redundant distribution of the broadcast message in the communication system is avoided by sending a cancellation of broadcast message from the node that received the broadcast message to other nodes in the system. The message includes information of the broadcast message to be cancelled. The cancellation message is then handled at the nodes receiving the cancellation message in certain ways. Usually, the communication system comprises two or more networks, whereby a part of the nodes are forwarding nodes, which tie the networks together and which are able to forward messages from one of the networks to another. Then, the nodes to which the cancellation of broadcast message is sent are forwarding nodes. Redundant distribution of broadcast messages is avoided in the invention. The invention is also concerned with the communication system in which the method is used as well as a computer program product which performs the method. The computer program product of the invention is run in the nodes of the networks forming the communication system.

## Description

The invention is concerned with a method in a communication system, especially a method for sending broadcast messages in wireless ad-hoc networks. The invention is also concerned with the use of the method, said communication system and a computer program product which performs the method.

### BACKGROUND ART

A computer network is formed when two or more computers are connected together. Local area networks may be formed of the computers within a company, while wide area networks may be extended over bigger areas. The networks, which might be fixed or wireless, may be connected via cables, fibers and/or radio links in accordance with different arrangement technologies of the computers, such as token ring, ethernet, etc.

Networks, which are formed on site, usually meant for temporary use and are "selfforming" in the sense that the topology of such a network is dynamic and not controlled by any central function are called ad-hoc networks.

Bluetooth is a wireless communication technology using a frequency hopping scheme as access technology in the unlicensed 2.4. GHz ISM (Industrial Scientific Medical) band. The original intention of Bluetooth was to eliminate cables between phones, PC-cards, wireless headsets, etc. by supporting communication over the radio interface, but today Bluetooth is a true ad-hoc wireless network technology intended for both synchronous traffic, e.g. voice, and asynchronous traffic, e.g. IP based data traffic. The aim is that any commodity device unit, such as telephones, PDAs, laptop computers, digital cameras, video monitors, printers, fax machines, etc. should be able to communicate over the radio interface by means of a Bluetooth radio chip and its software.

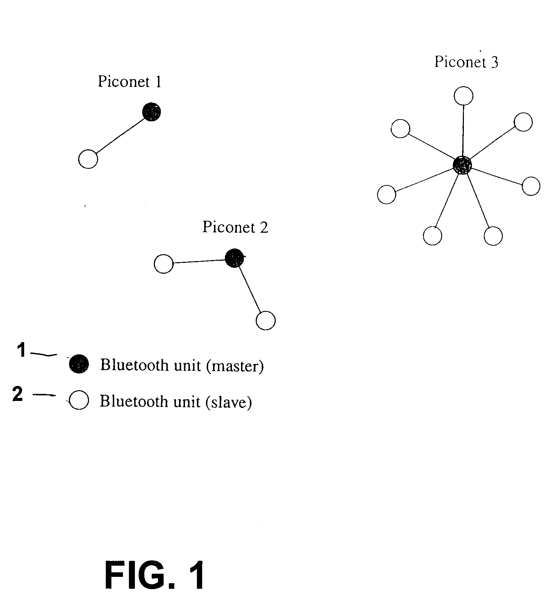

Two or more Bluetooth (BT) units sharing the same channel form a *piconet* (See Figure 1). Within a piconet, a BT unit can have either the role of a master unit or of a slave unit. Within each piconet, there can be only one master (and there must always be one) and up to seven active slaves. Any BT unit can become a master in a piconet.

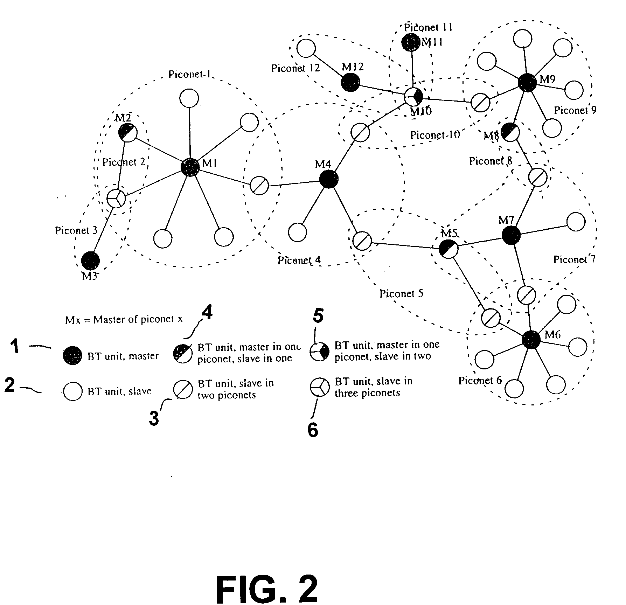

Furthermore, two or more piconets can be interconnected, forming what is called a *scatternet* (See Figure 2). The connection point between two piconets consists of a BT unit that is a member of both piconets. A BT unit can simultaneously be a slave member of multiple piconets, but only master in one (although a BT unit can that acts as master in one piconet can participate in other piconets as a slave). A BT unit can only transmit and receive data in one piconet at a time, so participation in multiple piconets has to be on a time division multiplex basis.

The Bluetooth system provides full-duplex transmission built on slotted Time Division Duplex (TDD), where each slot is 0,625ms long. The time slots are numbered sequentially using a very large number range (cyclic with a cycle of 2²⁷). Master-to slave transmission always starts in an even-numbered time slot, while slave-to-master transmission always starts in an odd-numbered time slot. An even-numbered time slot and its subsequent odd-numbered time slot (i.e. a master-to-slave time slot and a slave-to-master time slot, except when multi-slot packets are used) together are called a frame. There is no direct transmission between slaves in a Bluetooth piconet.

The communication within a piconet is organized such that the the master polls each slave according to some polling scheme. With one exception, a slave is only allowed to trasmit after having been polled by the master. The slave will then start its transmission in the slave-to-master time slot immediately following the packet recieved from the master. The master may or may not include data in the packet used to poll a slave. The only exception to the above principle is that when a slave has an established SCO link (see below for explanation), it is always allowed to transmit in the pre-allocated slave-to-master time slot, even if not explicitly polled by the master in the preceding master-to-slave time slot.

The Open system Interconnection (OSI) reference model describes how informtion from a software application in one computer moves through a network medium to a software application in another computer. The OSI reference model is a conceptual model composed of seven layers, each specifying particular network functions. The physical layer defines the electrical, mechanical, procedural and functional specifications for the physical link between communicating network systems. IEEE 802 is a standard specifying a physical layer.

Each BT unit has a globally unique 48 bit IEEE 802 address. This address, called the Bluetooth Device address (BD_ADDR) is assigned when the BT unit is manufactured and it is never changed. In addition to this, the master of a piconet assigns a local Active Member Address (AM_ADDR) to each active slave member of the piconet. The AM_ADDR, which is only three bits long, is dynamically assigned and de-assigned and is unique only within a single piconet. The master uses the AM_ADDR when polling a slave in a piconet. However, when the slave, triggered by a packet from the master addressed with the slave's AM_ADDR, transmits a packet to the master, it includes its own AM_ADDR (not the master's which does not exist) in the packet header.

Even though all data is tranmitted in packets, the packets can carry both synchronous data, on Synchronous Connection Oriented (SCO) links (mainly intended for voice traffic), and asynchronous data, on Asynchronous Connectionless (ACL) links. Depending on the type of packet that is used, an aknowledgement and retransmission scheme is used (not for SCO packets transferring synchronous data) to ensure reliable transfer of data (as well as forward or error correction (FEC) in the form of channel coding).

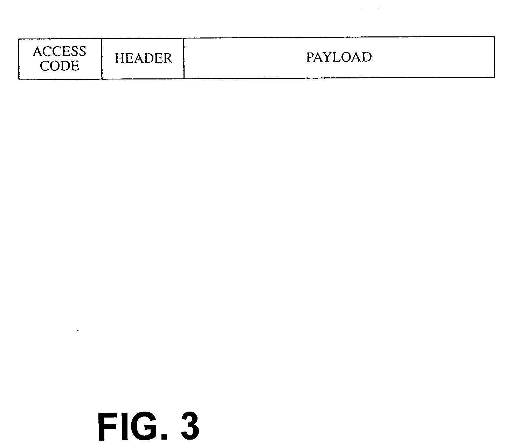

The standard format of a Bluetooth Base packet (although there are exceptions for certain control packets) is shown in figure 3. The AM_ADDR is located in the packet header followed by some control parameters (e.g. a bit indicating aknowledgement or retransmission request of the previous packet, when applicable) and a header error check (HEC). The format of the payload depends on the type of packet. The payload of an ACL packet consists of a header, a data field and (with the exception of AUX1 type packets) a cyclic redundancy determine (CRC). The payload of an SCO packet consists of only a data filed. In addition, there are hybrid packets including two data fields, one for synchronous data and one for asynchronous data. Packets in which the payload does not include a CRC are neither aknowledged nor retransmitted.

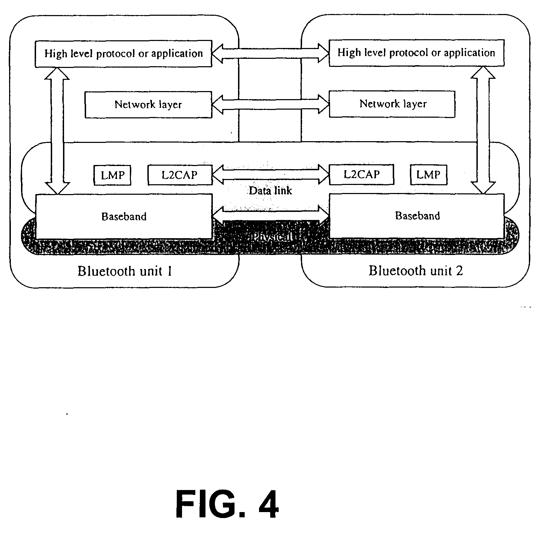

The protocol layers of a Bluetooth system are illustrated in figure 4. The baseband, LMP and L2CAP represent existing Bluetooth specific protocols, the "High level protocol or application" layer represent protocols that may or may not be Bluetooth specific, while the Network layer is currently not specified in the Bluetooth standard.

A limitation of the Bluetooth system is that, in the current standard specifications, there is no way to address and route packets from one piconet to another. How interpiconet communication is performed in a scatternet is not specified.

An important aspect of Bluetooth ad-hoc networking is how to support IP (Internet Protocol) in a Bluettooth scatternet (or a piconet), i.e. essentially how to run IP on top of the Bluettoth protocol stack.

One solution proposed to run IP is to regard each Bluetooth piconet as an IP subnet and to run IP on top of L2CAP in each piconet.

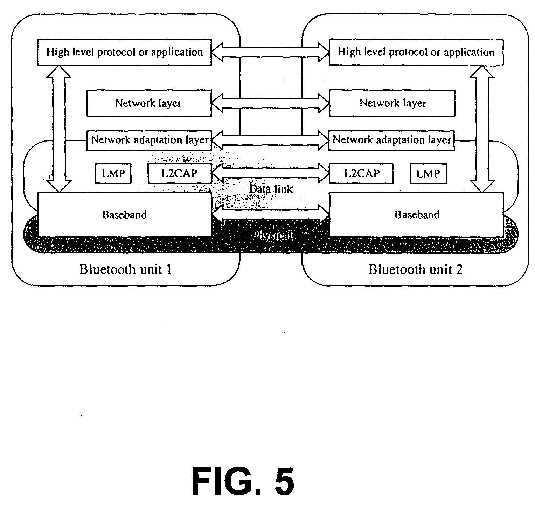

Another solution is to regard an entire Bluetooth scatternet as an IP subnet. This requires that an adaptation layer (henceforth referred to as Network Adaptation layer, NAL) is inserted between L2CAP and the IP layer (See figure 5). The purpose of this adaptation layer is to emulate a shared medium network (i.e. a broadcast medium) which is assumed by the IP layer.

The first solution suffers from a number of problems, partly due to that the Bluetooth Piconets are not shared medium networks. The second solution is regarded as more promising even if it is not without problems either.

The NAL layer will have to support a number of features. One very basic feature that is required is to have some kind of a routing mechanism to route packets within a scatternet (there are several ad-hoc routing protocols proposed for this purpose), while emulating towards the IP layer that the scatternet is actually a single shared medium network. Regardless of what routing scheme is used to route packets through a scatternet, it relies on the BT units that are members in more than one piconet to forward packets from one piconet to another. These BT units are henceforth referred to as *forwarding nodes.* Depending on the specification of the NAL layer, the master unit of a piconet with two or more slave units connected, may or may not be regarded as a forwarding node (forwarding messages between slave units in the piconet), even if the master unit is not connected to more than one piconet.

A number of mechanisms in an IP network, e.g. the ARP (Address Resolution Protocol) and DHCP (Dynamic Host Configuration Protocol) mechanisms, rely on a broadcast mechanism on the underlying link layer (this is normally not a problem, since the underlying network is usually a shared medium network).

Many networks have support for broadcast messages. The purpose of many broadcast messages is to find a specific resource in the network or to have a specific piece of information returned. For instance, an ARP (Address Resolution Protocol) request is broadcast in order to reach the node which is assigned a certain IP address. As a response, the node will return its MAC (Medium Access Control) address (in case of a Bluetooth scatternet, this is probably the BD_ADDR) which in turn can be used to send unicast messages to the node. Another example is when DHCP (Dynamic Host Configuration Protocol) is used to assign an IP address to a newly connected node in a network. The first step of this procedure is that the new node broadcasts a message (a DHCPDISCOVER message) to locate at least one available DHCP server from which it can obtain an IP address. Still one example is when random IP addresses are used in an ad-hoc network. A node which chooses a random IP address must make sure that this address is unique within the ad-hoc network. This is done by broadcasting a message in the ad-hoc network and including the randomly chosen IP address in the message. If a node that already uses the same IP address receives the broadcast message, it will return a response message indicating that the concerned IP address is already taken. In all these cases, the node sending the broadcast message expects to get a reply from only one of the nodes receiving the broadcast message.

Sometimes the broadcast message can trigger a reply from multiple nodes, although the sender of the broadcast message only needs to receive one (regardless of which). In true broadcast networks (i.e. shared medium networks) a broadcast message is received by all nodes at the same time and in cases when a reply can be triggered in multiple nodes, although the sending node only needs one, multiple redundant reply messages are often avoided using the following two principles: 1) The reply message is delayed for a random time interval before it is sent by a node in which a reply message has been triggered, and 2) if before the reply message has been sent, the node receives a reply message sent by another node responding to the same broadcast message, the node cancels its delayed reply message.

An example of a prior art solution for avoiding unnecessary traffic has been presented in the European patent application EP 0 913 965. In this solution, rebroadcasting of a message is avoided by a method in which a node receiving a broadcast messages checks from a list with stored identities of broadcast messages if it is supposed to forward a broadcast message. If the identity of the received broadcast message is found in the list, the broadcast message is not forwarded.

The broadcast situation is special for a network in which a broadcast message is not received by all nodes at the same time. For example a Bluetooth scatternet is such a network and is therefore not a true shared medium network. On the contrary, there may be a significant time difference between the reception of a broadcast message in the first node and the reception of the same broadcast message in the last node.

In Bluetooth, it is an important feature to support broadcasting. The NAL layer translates into distribution of broadcast messages so that every node in the scatternet receives the message, while avoiding that the message is transferred in loops. Freedom of loops is usually (i.e. in similar network topology environments) guaranteed by giving every broadcast message a unique identity, normally the source address (i.e. the address of the node sending the broadcast message) and a sequence number. A forwarding node that forwards a broadcast message must cache the unique identity of the forwarded broadcast message for a certain period of time and if a broadcast message with the same identity as one of the cached identities is received, the message is discarded and not forwarded. Similarly, a nonforwarding node receiving a broadcast message must cache the unique identity of the received broadcast message for a certain period of time and if a broadcast message with the same identity as one of the cahed identities is received, the message is discarded.

Furthermore, each broadcast message imposes a significant load in a Bluetooth scatternet, since it will traverse every link and has to be forwarded by every forwarding node in the scatternet (as opposed to a true shared medium network, where a broadcast message does not impose a greater network load than a unicast message).

In cases where only a single reply message is required to a broadcast message, and a reply message is generated early in the broadcast distribution, the continuing distribution of the broadcast message in the scatternet is unnecessary and redundant (and may also trigger redundant reply messages). If this redundant broadcast distribution could be avoided, the load caused by broadcast messages in a scatternet could potentially be reduced significantly.

The aim of the present invention is to introduce a new mechanism that reduces redundant broadcast distribution in a network.

### SUMMARY OF THE INVENTION

The invention provides a method in a communication system comprising one or more networks. Each network consists of nodes interconnected by point-to-point links. The system supports distribution of broadcast messages to nodes in the networks. When, in the method of the invention, a broadcast message is received at a node in the communication system, the node considers the risk for redundant distribution of the broadcast message. Redundant distribution of the broadcast message in the communication system is avoided by sending a cancellation of broadcast message (cancellation of broadcast message is also called cancellation message in the text) from the node that received the broadcast message to other node(s) in the system. The message includes information of the broadcast message to be cancelled. The cancellation message is then handled at the nodes receiving the cancellation message in certain ways.

When the communication system, where the method of the invention is used, comprises only one network, it consists of three or more nodes. Usually, the communication system comprises two or more networks, whereby the networks consists of two or more nodes, a part of the nodes being forwarding nodes, which tie the networks together and which are able to forward messages from one of the networks to another. Then, the nodes to which the cancellation of broadcast message is sent are forwarding nodes.

The idea with the invention is that the broadcast message is forwarded within the network until some node that receives it considers the risk for redundant distribution.

If that happens, a cancellation of broadcast message will be forwarded to the forwarding nodes in the system instead. If a node, that has received a cancellation of broadcast message will after that receive a broadcast message concerning the same message, the broadcast message will not be forwarded further in the system. In case of a single piconet, the master unit will not forward the broadcast message to other slave units if the distribution would be redundant.

The invention is also concerned with the communication system in which the method is used and a computer program product which performs the method. The computer program product of the invention is run in the nodes of the networks forming the communication system. This can be done by programming it by means of a medium, such as hardware, etc. It can even be implemented in Hardware or Firmware.

The invention can be used in various kinds of communication systems. The use of the invention in Bluetooth piconets and scatternets are further aspects of the invention.

By means of the invention, a significant load in the system caused by redundant distribution of broadcast messages can be reduced, thereby saving transmission resources in the system and processing resources in the nodes to which the useless message delivery is avoided. In addition, unnecessary delay of other traffic is avoided.

The invention is of great value in networks, wherein broadcast messages are not received at the same time by all the nodes in the system, such as in a Bluetooth scatternet. Since Bluetooth is the main target, the invention will be described in a Bluetooth context using Bluetooth terminology. It is, however, pointed out that the invention can equally well be used in other network technologies, both wired and wireless. Furhtermore it is pointed out that, the Bluetooth networks presented are only examples of Bluetooth networks.

### DRAWINGS

- Figure 1: shows examples of Bluetooth piconets
- Figure 2: shows a Bluetooth scatternet
- Figure 3: shows the Bluetooth standard baseband packet format
- Figure 4: shows the Bluetooth protocol layers
- Figure 5: shows the Bluetooth protocol layers, including a network adaption layer
- Figure 6: is a block scheme of the principle of the invention
- Figure 7: is a block scheme of a more detailed example of the invention
- Figure 8: is an example of efficient use of the method of the invention
- Figure 9: is another example of efficient use of the method of the invention

### DETAILED DESCRIPTION

Two or more Bluetooth (BT) units sharing the same channel form a *piconet* as shown in figure 1, wherein three different piconets 1, 2 and 3 are shown. Within a piconet, a BT unit can have either the role of a master unit, referred to with filled circles 1, or of a slave unit, referred to with unfilled circles 2. Within each piconet, there can be only one master (and there must always be one) and up to seven active slaves. Any BT unit can become a master in a piconet.

Furthermore, two or more piconets can be interconnected, forming what is called a *scatternet* as shown in figure 2. The connection point between two piconets consists of a BT unit that is a member of both piconets, reference number 3 in figure 2. A BT unit can simultaneously be a slave member of multiple piconets, but only master in one (although a BT unit can that acts as master in one piconet can participate in other piconets as a slave, reference number 4). Reference number 5 represents a BT unit that acts as master in one piconet and slave in two piconets, whereas reference number 6 is a BT unit that acts as a slave in three piconets. A BT unit can only transmit and receive data in one piconet at a time, so participation in multiple piconets has to be on a time division multiplex basis.

The method of the invention can be used in a communication system comprising one or more networks. The communications system can e.g. be a digital packet based (wired or wireless) system, such as a Bluetooth scatternet. When the communication system, where the method of the invention is used, comprises only one network, it consists of three or more nodes, which are interconnected by point-to-point links. Usually, the communication system comprises two or more networks and then each network consists of two or more nodes. A point-to-point link provides a single communication path between units. When there are two or more networks, a part of the nodes are forwarding nodes, which tie the networks together. These forwarding nodes can forward messages from one of the networks to another. The system supports distribution of broadcast messages to the nodes in the networks.

In the invention, redundant distribution of broadcast messages is reduced by introducing a cancellation of broadcast meachanism. In case of a Bluetooth scatternet, the mechansim is a new feature in the NAL layer called cancellation of broadcast.

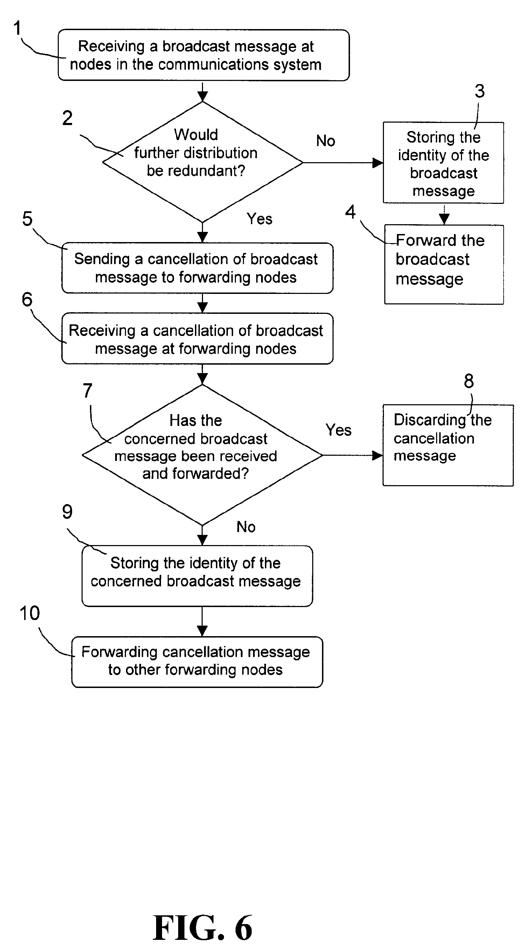

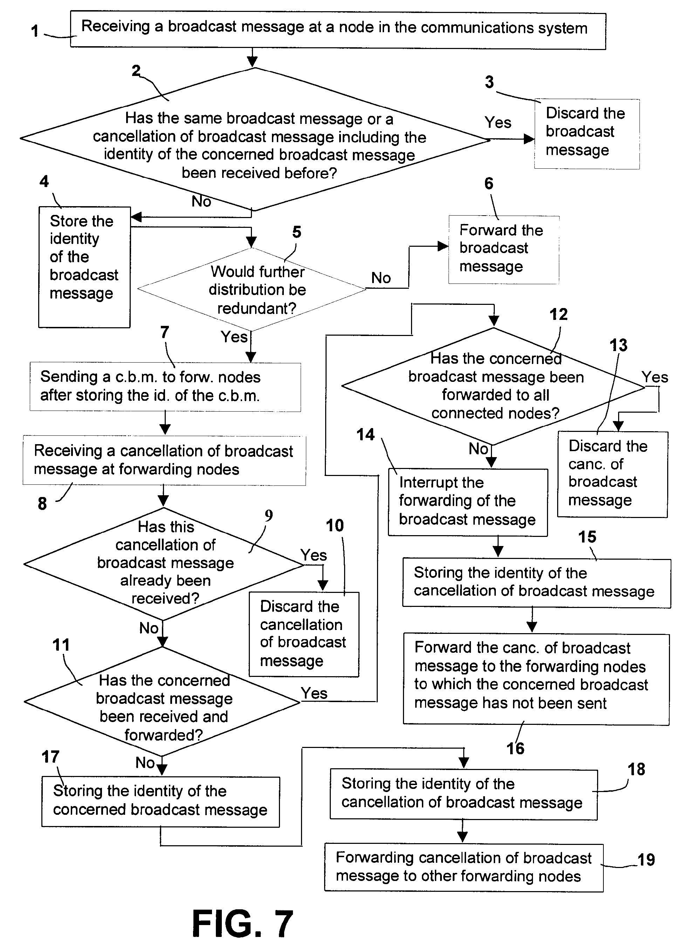

Referring to figure 6, wherein the principle of the invention is described, the method of the invention begins in step 1 with receiving a broadcast message at a node in the communications system. (It is, in the example of figures 6 and 7 assumed that, the system consists of at least two networks.). Next, the node consider in step 3 if further distribution of the broadcast message would be redundant. When a node receiving the broadcast message realizes that subsequent distribution of the broadcast message is redundant, e.g. because it has just sent, or is just about to send, a reply message to the broadcast message requiring only one reply message, it sends a cancellation of broadcast message in step 5 to forwarding nodes in the system (which can be a Bluetooth scatternet, in which case the cancellation of broadcast message might be sent to neighbouring forwarding nodes of the same piconet via master units, which may or may not be regarded as a forwarding node by the NAL) including information of the broadcast meassage to be canceled. This information e.g. includes the unique identity of the broadcast message to be canceled (i.e. the identity of the received broadcast message). If the node has no reasons to assume that further distribution of the broadcast would be redundant, the broadcast message is handled normally and sent forward to all nodes in the system in step 4 after having stored the identity of the broadcast message in step 3.

The cancellation of broadcast message is distributed only to the forwarding nodes in the system (via master units with different alternative methods in case of a Bluetooth system). If master units are considered to be forwarding nodes, the cancellation of broadcast message is distributed also to the master units. (For example in a Bluetooth system, the NAL layer might consider those as forwarding nodes, which depends on the specification of the applicable NAL layer. In any case, even if the master units are not considered to be forwarding nodes, the master unit of a piconet will be traversed at least on the baseband layer (generally on a lower protocol layer if it is not a Bluetooth network) when a cancellation of broadcast message is transferred across the piconet. But even if the master units are considered to be forwarding units, a cancellation of broadcast message will not be forwarded to a master unit, if the piconet is a dead end, i.e. if there are no other forwarding nodes connected to the piconet (provided that the presence of other forwarding nodes in a piconet is known to each forwarding node). Henceforth, the term "forwarding node" may or may not include master units.

In addition to the included identity of the broadcast message to be cancelled, the cancellation of broadcast message itself will preferably have an identity, e.g. a source address and a sequence number, to ensure loop-free delivery of the message.

A forwarding node receiving a cancellation of broadcast message in step 6 will search its cache in step 7 for the broadcast message identity that is included in the concerned cancellation of broadcast message. If the identity is found in the cache, this means that the concerned broadcast message has already been received and forwarded.

If the receiving node is still in the process of forwarding the broadcast message, this process can in a preferable embodiment be interrupted and the broadcast message will not be forwarded to the remaining nodes (i.e. the nodes to which the receiving node has not yet forwarded the broadcast message) to which the receiving node is connected. In case any of these remaining nodes is a forwarding node (not connected to the piconet from which the cancellation of broadcast message was received in the receiving node), the cancellation of broadcast message is forwarded to this node (or these nodes) and the identity of the cancellation of broadcast message can be stored in the receiving node in order to prevent that the cancellation of broadcast message is delivered in loops.

If the broadcast message had already been forwarded to all the nodes connected to the receiving node (except maybe the one from which the cancellation of broadcast message was received) then, the cancellation of broadcast message arrived too late and is discarded without being forwarded in step 8.

If the identity was not found in the cache, it means that the concerned broadcast message has not arrived yet (and possibly never will, due to the distribution of the cancellation of broadcast message). Then, the identity of the broadcast message received in the cancellation message is stored in step 9 in the cache of recently forwarded broadcast messages (or some other place in the forwarding node) to prevent forwarding of the concerned broadcast message in case it is received later. Preferably, the identity of the cancellation of broadcast message itself will also be stored in the forwarding node in order to prevent that the cancellation of broadcast message is delivered in loops (not illustrated in figure 6). An identity can be a source address (the address of the node where the broadcast message originated) and a sequence number (each node will sequentially number the broadcast messages which originates in the node). Loop-free delivery of broadcast messages is acheived since all nodes receiving the broadcast message will temporarily store the broadcast message identity. If the same broadcast message is received a second time (this can be checked by comparing the identity of the received broadcast message with the temporarily stored broadcast message identities), the broadcast message is discarded.

The cancellation of broadcast message is then forwarded to other neighboring forwarding nodes in step 10 (i.e. forwarding nodes connected to the same network, i.e. the same piconet in case of a Bluetooth system), except those connected to the piconet over which the cancellation of broadcast message was received.

If the node receiving the cancellation of broadcast message is a master unit, the procedure may be somewhat different. Consider the scenario when the master unit has begun to distribute a received broadcast message to the slave units in the piconet (on a unicast basis). When the master unit sends the broadcast message to the first slave unit (or at least one of the first slave units) in the piconet, the slave unit, immediately in the subsequent slave-to-master time slot (or at least before the broadcast message has been delivered to all the slave units in the piconet), returns a cancallation of broadcast message concerning the broadcast message. The master unit will then cancel the delivery of the broadcast message to the remaining slave units in the piconet and instead forward the cancellation of broadcast message to the forwarding nodes in the piconet that have not yet received the broadcast message. If the piconet is not connected to any other piconets, then there are no forwarding nodes in the piconet for the master unit to forward the cancellation of broadcast message to, and the master unit will simply cancel the delivery of the broadcast message to the remaining slave unit(s) in the piconet.

A forwarding node receiving a broadcast message, whose identity is found in the cache, will discard the message without forwarding it, since the existence of the identity in the cache implies that either the broadcast message concerning the received broadcast message has already been previously received, or a cancellation of broadcast message concerning the received broadcast message has previously been received. Both cases are valid reasons to discard the received broadcast message.

This scheme allows a cancellation of broadcast message to stop the distribution of a broadcast message in the parts of the scatternet where the cancellation of broadcast message arrives before the concerend broadcast message.

An advantageous example of the invention is given in figure 7. According to the figure, a broadcast message is received in step 1. In step 2, it is checked if the same broadcast message or a cancellation of broadcast message has been received before. If that is the case, the broadcast message is discarded in step 3. If that is not the case, the identity of the broadcast message is stored in the node in step 4. It is then checked in step 5, whether further distribution of the broadcast message would be redundant. If no, the broadcast message is forwarded in step 6. If yes, a cancellation of broadcast message identity is stored and the cancellation of broadcast message (abbreviated as c.b.m. in the figure) is sent to the forwarding (abbreviated as forw. In the figure) nodes in the communication system in step 7.

When the cancellation of broadcast message is received in step 8 by the forwarding nodes, it is checked in step 9 if this cancellation of broadcast message already has been received. If yes, the cancellation of broadcast message is discarded in step 10. If no, it is checked, whether the concerned broadcast message has been received and forwarded in step 11.

If the answer of step 11 is yes, it is checked, if the concerned broadcast message has been forwarded to all connected nodes in step 12. If yes, the cancellation of broadcast message is discarded in step 13. If no, the forwarding of the broadcast message is interrupted in step 14, the identity of the cancellation of broadcast message is stored in step 15, and in step 16 the cancellation of broadcast message is forwarded to the forwarding nodes to which the concerned broadcast message has not been sent.

If the answer of step 11 is no, the identity of the concerned broadcast message, which identity was recieved in the cancellation of broadcast message, is stored in step 17, the identity of the cancellation of broadcast message is stored in step 18 and the cancellation of broadcast message is forwarded to other forwarding nodes in step 19.

In essence, the distribution of the cancellation of broadcast message replaces the distribution of the concerend broadcast message in parts of the scatternet. But since the cancellation of broadcast message is only distributed among forwarding nodes-not to slave nodes that are not forwarding nodes - most of the load is eliminated in the parts of the scatternet where the distribution of the cancellation of broadcast message replaces the distribution of the concerend broadcast message.

In addition, a cancellation of broadcast mesage may often be smaller than the broadcast message whose distribution it aims to stop (this may almost always be the case since a cancellation of broadcast message does not carry any data from protocol layers above the NAL layer and thus saves the bits otherwise occupied by e.g. the IP header).

A way to further increase the efficiency of the cancellation of broadcast mechanism is to give cancellation of broadcast messages high priority when messages are forwarded, at least higher priority than broadcast messages in general.

Hence, the cancellation of broadcast mechansim can never increase the load in a scatternet, it can only more or less reduce the load caused by the distribution of a broadcast message.

Since the knowledge of when it is appropriate to send a cancellation of broadcast message resides in protocol layers above the NAL layer, possibly even on the application layer, the NAL layer must have a service primitive for the sending of a cancellation of broadcast message. This service primitive may be tied to the delivery of a received broadcast message from the NAL layer (upwards in the protocol stack) to enable inclusion of the correct broadcast message identity in the cancellation of broadcast message. To facilitate this, the identity of a broadcast message may be passed to higher protocol layers together with the contents of the concerned broadcast message.

It is also possible to let the application (in the source node) issuing the broadcast message decide whether the cancellation of broadcast mechanism is allowed for a particular broadcast message. This could be achieved by having two types of broadcast messages, one that can be cancelled by cancellation of broadcast messages and one that will be unaffected by cancellation of broadcast messages. For the latter type, no cancellation of broadcast messages would be sent. The different types of broadcast messages could be distinguished e.g. by a one bit indicator in the message header, or even by using different (dedicated) broadcast addresses.

In one variation of the invention, a node can respond to a received broadcast message and send a cancellation of broadcast message on behalf of another node. If e.g. node A is the appropriate responder (e.g. because A is the node that represents the resource which was the purpose of the broadcast message to find or which holds the information requested by the broadcast message), and node B knows that node A is the appropriate responder and node B is able to generate the same response message as node A would generate, then node B can generate the unicast response message and a cancellation of broadcast message on behalf of node A. In a typical example, node A would be a slave node in a piconet and node B would be the master of the same piconet.

In another variation of the invention, one node can send the cancellation of broadcast message, while another node (the appropriate responder) generates the response message. If e.g. node A is the appropriate responder and node B knows that node A is the appropriate responder, but node B can not generate the response on behalf of node A (e.g. because node B knows that node A holds the requested information, but node B does not know what the information is), then, when receiving the broadcast message, node B can send a cancellation of broadcast message and then unicast the contents of the broadcast message (including the original identity, such as the source address and sequence number of the broadcast message) to node A. Node A can then generate the actual response message.

Another case, when this variation of the invention is useful is when node B can actually generate the response message on behalf of node A, but node A still has to receive the broadcast message, because one of the intentions with the broadcast message is to cause some internal effect, e.g. a state change in the appropriate responder (i.e. node A in this case). In this case node B can send the cancellation of broadcast message and may or may not also send the unicast response message. The contents of the broadcast message (including the original identity, such as the source address and sequence number of the broadcast message) is then unicast to node A. If node B did not send the response message, node A will, but if node B did send the response message, node A will not send any message at all. Again, in a typical situation node B could be the master of a piconet to which node A is connected as a slave unit.

### EXAMPLES

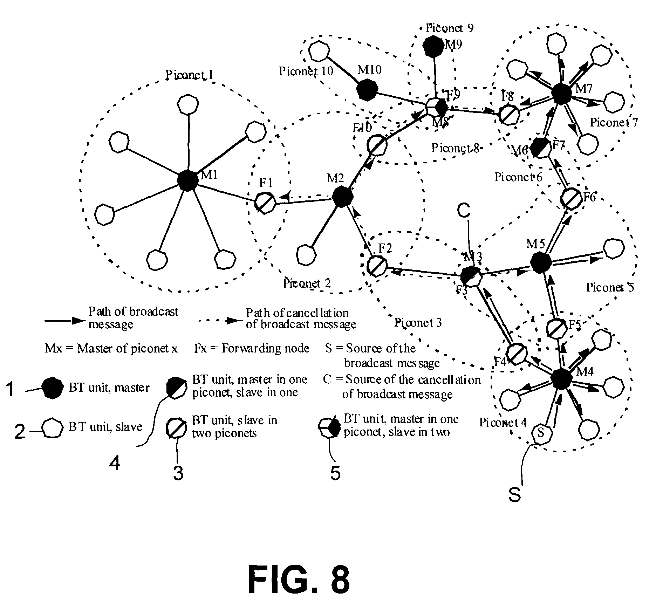

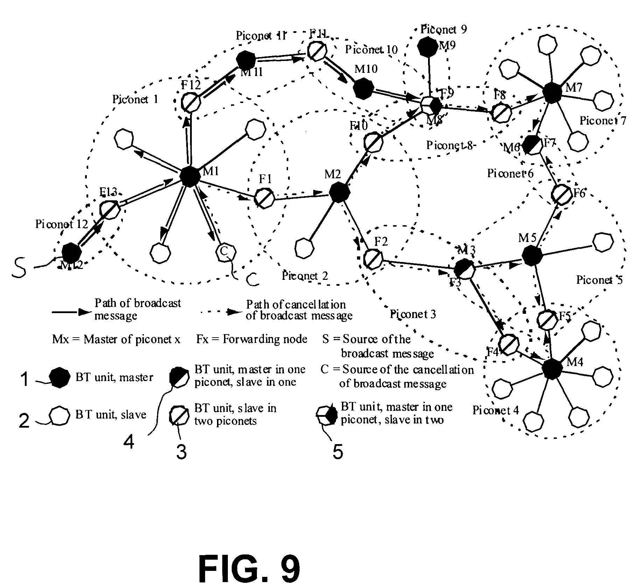

Two examples of efficient use of the cancellation of broadcast mechanism in a scatternet is illustrated in the following examples presenting some typical situations. The reference numbers 1 - 5 in figures 8 - 9 presents the same functional units as in figure 2. In figures 8 and 9, master units are represented with letter M and the number of piconet, they are master in, and forwarding nodes are represented with letter F and a sequence number. Those nodes, which are a slave in one piconet but a master in another are represented with two names, an F name and a M name. In figures 8 and 9, master units are also considered to be forwarding nodes.

### EXAMPLE 1 (The invention used in the Bluetooth scatternet of figure 8)

A broadcast message initiates from slave unit S in piconet 4.

At first it is forwarded to master unit M4 of piconet 4. From M4 it is forwarded to the slaves of piconet 4, including the forwarding nodes F4 (belonging to both piconets 4 and 3) and F5 (belonging to both piconets 4 and 5).
From F5, it is forwarded to the master unit M5 of piconet 5. From M5 it is forwarded to those slaves of piconet 5, that did not already get it, included forwarding node F6 (belonging to both piconets 5 and 6). With respect to node F3 (which is a slave and forwarding node in piconet 5, a master unit M3 in piconet 3), it is in this example assumed that a cancellation of broadcast message is received at M5 from F3 after that the broadcast message has been received at M5 and sent forward to F6 and the slave to the right in piconet 5 but before M5 had sent the broadcast message to F3. Therefore, M5 never sent the broadcast message to F3.

From F6 it is forwarded to F7 (belonging to both piconets 6 and 7, and simultanously being master unit M6 of piconet 6).
From F7 it is forwarded to master unit M7 of piconet 7. From M7 it is forwarded to all the slaves of piconet 7, including F8 (belonging to both piconets 7 and 8).

From F4, it is forwarded to C, i.e. the master unit M3 of piconet 3 (which simultaneously is a forwarding unit F3 in piconet 3).
At C, i.e. the master unit M3 of piconet 3, the broadcast message is replaced with a cancellation of broadcast message, as node C consider the risk for redundant distribution of it, e.g. because this node C is the one having the information to be able to reply to the broadcast message.
According to the invention, a cancellation message is now only forwarded to forwarding units, which in this example includes master units.
From M3, the cancellation of broadcast message is forwarded to M5, from where it is not forwarded anymore, since M5 has already got the broadcast message and can find the identity of it in its cache.

From C, i.e. M3, the cancellation of broadcast unit is also forwarded to the slave of piconet 3 because it is a forwarding unit, i.e. F2 of piconets 3 and 2).

From F2, the cancellation of broadcast message is forwarded to master unit M2 of piconet 2. From M2, the cancellation of broadcast message is forwarded to the forwarding units of piconet 2, i.e. F10 (also belonging to piconet 10) and F1 (also belonging to piconet 1).
From F10, the cancellation of broadcast message is forwarded to master unit M8 (of piconet 8 (which also is forwarding node F9 of piconet 9).
From F9, the cancellation of broadcast message is forwarded to forwarding node F8 of piconet 8, from where it is not forwarded anymore, since it is in this example assumed that F8 has already got the broadcast message and can find the identity in its cache.
The cancellation of broadcast message is not forwarded to any other nodes from F9 than to F8, since there are no other forwarding nodes. The same is true for F1, from where it is not forwarded anywhere either because of the same reasons.

Thus, message delivery is avoided to the following nodes: all the BT units in piconet 1, except forwarding node F1, one of the slave units in piconet 2, all the BT units, except F9, in piconet 10, and the master unit of piconet 9. Altogether eleven nodes.

### EXAMPLE 2 (The invention used in the Bluetooth scatternet of figure 9)

A broadcast message initiates from BT unit S, i.e. the master unit M12 of piconet 12. From M12, the broadcast message is forwarded to forwarding node F13 of piconet 1. From F13 it is forwarded to master unit M1 of piconet 1. M1 now begins to forward it to the slaves of piconet 1 one by one including forwarding node F12 (also belonging to piconet 11). M1 has however, not sent the broadcast message yet to the slave up to the right nor to F1 before it gets a cancellation of broadcast message back from slave C.
From F12, the broadcast message is forwarded to master unit M11 of piconet 11 and from M11 to forwarding node F11 (also belonging to piconet 10).
From F11, the broadcast message is forwarded to master unit M10 of piconet 10 and from M10 to forwarding node F9 (also being master unit M8 of piconet 8 and also belonging to piconets 8 and 9).

At slave unit C in piconet 1, the broadcast message, as already was mentioned, is replaced with a cancellation of broadcast message, as node C consider the risk for redundant distribution of it, e.g. because it has just replied or is going to reply the broadcast message.
From C, the cancellation of broadcast message is forwarded back to M1 before M1 has sent the broadcast message to the slave up to the right and before it has sent it to forwarding node F1 (also belonging to piconet 2). M1 now sends the cancellation of broadcast message instead to F1 as it is a forwarding node.
From F1, the cancellation of broadcast message is forwarded to master unit M2 of piconet 2. From M2, the cancellation of broadcast message is forwarded to the forwarding nodes F10 (also belonging to piconet 8) and F2 (also belonging to piconet 3).
From F10, the cancellation of broadcast message is forwarded to master unit 8 of piconet 8 (also being forwarding node F9 belonging to piconets 8, 9 and 10).
In this example it is now assumed that M8 (=F9) receives the cancellation of broadcast message from F10 before it receives the broadcast message from M10 but the broadcast message is received from M10 before a cancellation of broadcast message is sent from F10 to M10.
From F9, the cancellation of broadcast message is forwarded only to forwarding nodes and therefore it is not sent M9 since that would be a dead end but is sent to F8 (belonging to both piconets 7 and 8).
From F8, the cancellation of broadcast message is forwarded to M7 of piconet 7, which in this example is considered as a forwarding node and because there is another forwarding node in the same piconet. From M7, the cancellation message is forwarded only to forwarding node F7 of piconet 7 (which also is master unit M6 of piconet 6) from where it is not forwarded anymore because a cancellation of broadcast message arrives from F6.

From F2, the cancellation of broadcast message is forwarded to forwarding node F3 of piconet 3 (which also is master unit M3 of piconet 3). From M3, the cancellation message is forwarded to master unit M5 of piconet 5. From M5, the cancellation of broadcast message is forwarded to forwarding unit F6 of piconet 6.

From F6, the cancellation of broadcast message is forwarded to forwarding node F7, from where it is not forwarded anymore, as it is assumed in this example that F7 already has received the cancellation of broadcast message and can find the identity of the same in its cache.
From M3, the cancellation of broadcast message is also forwarded to forwarding node F4 of piconet 3 (also belonging to piconet 4). From F4, the cancellation of broadcast message is forwarded to M4 which forwards it to F5 from where it is not forwarded anymore since a cancellation of broadcast message had already been received from M5.

Thus, message delivery is avoided to the following nodes: one of the slave units in piconet 1, one of the slave units in piconet 2, all the slave units, except the forwarding nodes F4 and F5, in piconet 4, one of the slave units in piconet 5, five slave units in piconet 7 and the master unit of piconet 9. Altogether 14 BT units.

## Claims

1. Method in a communication system comprising one or more networks, each network consisting of nodes interconnected by point-to-point links, the system supporting distribution of broadcast messages to nodes in the networks, comprising the steps of
a) receiving a broadcast message at a node in the communication system,
b) considering the risk for redundant distribution of the broadcast message at the node that received the broadcast message,
c) avoiding redundant distribution of the broadcast message in the communication system by sending a cancellation of broadcast message from the node that received the broadcast message to other node(s) in the system, the message including information of the broadcast message to be cancelled,
d) handling of the cancellation message received at the node(s) that recieved the cancellation message.

2. Method of claim 1,**characterized** in that the communication system comprises two or more networks, whereby a part of the nodes are forwarding nodes, which tie the networks together and which are able to forward messages from one of the networks to another.

3. Method of claim 2, **characterized** in that nodes to which the cancellation of broadcast message is sent are forwarding nodes.

4. Method of any of claims 1 - 3, **characterized** in that the identity of the broadcast message is stored in the node, when it has been received in step a).

5. Method of any of claims 1 - 4, **characterized** in that the broadcast message is forwarded to all nodes in the system until a risk for redundant distribution is considered in step b) by some node receiving the broadcast message.

6. Method of any of claims 1 - 5, **characterized** by only allowing the cancellation of broadcast message for particular broadcast messages.

7. Any of claims 1 - 6, **characterized** in that a risk for redundant distribution is considered in step b) by a node receiving the broadcast message if it has just sent or intends to send a reply to the broadcast message requiring only one reply.

8. Method of any of claims 1 - 7, **characterized** in that, the information to be included in the cancellation message in step c) comprises the identity of the broadcast message received.

9. Method of any of claims 1 - 8, **characterized** in that, the information to be included in the cancellation message in step c) comprises a source address and a sequence number to ensure loop-free delivery of the message.

10. Method of any of claims 1 - 9, **characterized** in that in step d), the forwarding nodes receiving the cancellation message will search its cache or the like for the broadcast message identity that is included in the cancellation message received.

11. Method of claim 10, **characterized** in that if the broadcast message identity is found in the cache or the like of a node receiving the cancellation of broadcast message in step d), the cancellation message is discarded as unnecessary.

12. Method of claim 10, **characterized**in that if the broadcast message identity is not found in the cache or the like of a node receiving the cancellation of broadcast message in step d), the broadcast message identity is stored therein to prevent forwarding of the concerned broadcast message in case it is received later.

13. Method of claim 10, **characterized** in that if the broadcast message identity is not found in the cache or the like of a node receiving the cancellation of broadcast message in step d), the identity of the cancellation message itself is stored in the node in order to prevent it to be delivered in loops.

14. Method of claim 10, **characterized** in that if the broadcast message identity is not found in the cache or the like of a node receiving the cancellation of broadcast message in step d), the cancellation of broadcast message is avoided to be forwarded to other neighboring forwarding nodes connected to the network over which the cancellation message was received.

15. Method of any of claims 1 - 14, **characterized** in that all messages within a network go through a particular node in a network, which is referred to as a master node, to which the remaining nodes, being referred to as slave nodes, are connected.

16. Method of claim 10 and 15, **characterized** in that if the broadcast message identity is not found in the cache or the like of a node receiving the cancellation of broadcast message in step d), the cancellation message is forwarded to other neighboring forwarding nodes connected to the same network, which takes place via the master node of the network if the node itself is not a master node.

17. Method of claim 15 or 16, **characterized** in that the forwarding nodes in the system include master nodes.

18. Method of claim 15 or 16, **characterized** in that the forwarding nodes in the system do not include master nodes, whereby cancellation messages forwarded via master nodes might only go via a lower protocol layer.

19. Method of any of claims 15 - 18, **characterized** in that a cancellation message is not forwarded to a master unit if there are no other forwarding nodes in the network irrespective of if master nodes are regarded as forwarding nodes or not.

20. Method of any of claims 15 - 19, **characterized** in that if the forwarding node in the system is a master node receiving a cancellation of broadcast message before having sent the broadcast message to all its slave units, the delivery of broadcast messages to the remaining slaves is interrupted and instead, the cancellation message is sent to forwarding nodes.

21. Method of any of claims 1 - 20, **characterized** in that the cancellation message is given higher priority than broadcast messages.

22. Method of any of claims **1-21,characterized** in that the reply to a broadcast message and/or the cancellation of broadcast message is sent from a node on behalf of another node.

23. Method of claim 2, **characterized** in that after receiving a broadcast message at a node in the communication system in step a), checking if the same broadcast message or a cancellation of broadcast message including the identity of the concerned broadcast message has been received before, and acting in accordance with the situation checked.

24. Method of claim 23, **characterized** in that if it is considered that the same broadcast message or a cancellation of broadcast message including the identity of the concerned broadcast message been received before, the broadcast message is discarded.

25. Method of claim 23, **characterized** in that if it is considered that the same broadcast message or a cancellation of broadcast message including the identity of the concerned broadcast message has not been received before, checking if further distribution would be redundant in accordance with step b).

26. Method of claim 2, **characterized** in that when receiving the cancellation message in step d), checking if the cancellation of broadcast message already has been received.

27. Method of claim 26, **characterized** in that when receiving the cancellation message in step d), checking if the broadcast message already has been received and forwarded.

28. Method of claim 27, **characterized** in that if the broadcast message already has been received and forwarded, checking if the concerned broadcast message has been forwarded to all connected nodes.

29. Method of claim 28, **characterized** in that if the concerned broadcast message has not been forwarded to all connected nodes, storing the identity of the cancellation of broadcast message, and forwarding the cancellation of broadcast message to other forwarding nodes.

30. Method of claim 28, **characterized** in that if the concerned broadcast message has been forwarded to all connected nodes, discarding the cancellation of broadcast message.

31. Method of claim 28, **characterized** in that if the concerned broadcast message has not been forwarded to all connected nodes, interrupting the forwarding of the broadcast message and storing the identity of the cancellation of broadcast message.

32. Method of claim 31, **characterized** in that the cancellation of broadcast message is forwarded to the forwarding nodes to which the concerned broadcast message has not been sent.

33. Use of the method of any of claims 1, 4 - 11, 15, 21 and 22 in a Bluetooth piconet.

34. Use of the method of any of claims 1 - 32 in a Bluetooth Scatternet.

35. Communication system comprising one or more networks, each network consisting of nodes interconnected by point-to-point links, the system supporting distribution of broadcast messages to nodes in the networks, comprising
a) means for receiving broadcast messages at the nodes in the communication system,
b) means for considering a risk for redundant distribution of a broadcast message in the nodes in the communication system,
c) means for sending cancellation message from the nodes in the system to other nodes including information of the broadcast message to be cancelled,
d) means for handling of the cancellation message at the nodes.

36. Communication system of claim 35, **characterized** in that the communication system consists of two or more networks, whereby a part of the nodes are forwarding nodes, which tie the networks together and which are able to forward messages from one of the networks to another.

37. Communication system of claim 36, **characterized** in that the means of point c) are means for sending cancellation message from the nodes in the system to forwarding nodes including information of the broadcast message to be cancelled.

38. Communication system of any of claims 35 - 37, **characterized** by means for storing the identities of the broadcast message and the cancellation of broadcast messages in the nodes.

39. Communication system of any of claims 35 - 38, **characterized** by means for performing the steps of any of claims 4 - 11, 15, 21 and 22.

40. Communication system of any of claims 35, 38 and 39 **characterized** in that it is a Bluetooth piconet.

41. Communication system of any of claims 35 - 38, **characterized** by means for performing the steps of any of claims 4 - 32.

42. Communication system of claim 41, **characterized** in that it is a Bluetooth scatternet.

43. Communication system of claim 42, **characterized** in that the Bluetooth scatternet consists of piconets tied together by forwarding nodes.

44. Communication system of claim 40, **characterized** in that there are two or more networks, whereby each piconet consists of one master and one or more slaves, the master being a forwarding node forwarding messages between the slaves.

45. Communication system of claim 42 or 43, **characterized** in that there is only one network, whereby each piconet consists of one master and two or more slaves.

46. Computer program product to be used in the nodes of a communication system comprising one or more networks, each network consisting of nodes interconnected by point-to-point links, the system supporting distribution of broadcast messages to nodes in the networks, the computer program when placed via a medium in the nodes performing the following steps
a) receiving a broadcast message at a node in the communications system,
b) considering a risk for redundant distribution of the broadcast message at the node that received the broadcast message,
c) avoiding redundant distribution of the broadcast message in the communication system by sending a cancellation of broadcast message from the node that received the broadcast message to other nodes in the system, the message including information of the broadcast message to be cancelled,
d) handling of the cancellation message at the nodes.
47. Computer program product of claim 46, **characterized** in that it further performs the method of claims 2 - 32.
